# EUROPEAN PATENT APPLICATION

(11) **EP 0 748 115 A1**
(43) Date of publication of application: **11.12.1996**
(21) Application number: 95201505.5
(22) Date of filing: 08.06.1995
(51) Int. Cl.: H04N 5/32, G03G 15/054, G01T 1/26, G03B 42/04

(54) **Method for recording and reading out a pattern of penetrating electromagnetic radiation**

(71) Applicant: AGFA-GEVAERT naamloze vennootschap, B-2640 Mortsel (BE)
(72) Inventor: Van den Bogaert, Jan, c/o Agfa-Gevaert N.V.,, 2640 Mortsel (BE); Struye, Luc, c/o Agfa-Gevaert N.V.,, 2640 Mortsel (BE)

(57) **Abstract**

A method for recording an image of penetrating radiation and transforming said image in sequential electrical signals, wherein said method comprises the steps of :
(1) providing an opto-electronic device comprising two photoconductive layers, electrodes and a D.C. voltage source as defined herein;
(2) overall exposing one of said photoconductive layers to light whereby it becomes overall electrically conductive while a D.C. voltage difference is applied between said electrodes, said flood-light exposure proceeding during the information-wise exposure of the other photoconductive layer to penetrating electromagnetic radiation, but lasting no longer than the exposure to said penetrating radiation to which said other photoconductive layer is sensitive, while maintaining said D.C. voltage difference between said electrodes,
(3) scanning-wise exposing the flood-light exposed photoconductive layer with light to which it is sensitive while said D.C. voltage is maintained between said electrodes, hereby producing a sequential signal of image-wise varying electrical current that can be transformed in an external load in corresponding voltage variations.

## Description

### 1. Field of the Invention

The present invention relates to a method for recording a pattern of penetrating electromagnetic radiation in the form of an electrostatic charge pattern and its transformation into a storable sequential electronic signal pattern.

### 2. Background of the Invention

US-P 3,069,551 deals in its FIGURE 2 with an embodiment of an electrical apparatus for intensifying images wherein two photoconductive layers A and B of different materials are separated by a thin mosaic T electrically conducting in the direction normal to its surface but insulating in the transverse direction. This anisotropic conductivity can be obtained by using a closely packed mosaic of evaporated metal such as is known in the art. The outer sides of the photoconducting layers carry transparent conducting layers F and G across which a D.C. voltage is applied from a source of potential E.

In operation, one side of A is irradiated continuously with the image radiation of a source S₁ which might be light or X-rays and which does not excite B. Charge is thus allowed to conduct across the layer A and mosaic T and built at the interface between T and B.

The second photoconductive layer is scanned simultaneously with a spot of exciting radiation L from a source S₃ which discharges the build-up charge point by point as it moves across the layer B and gives electronic signals to an appropriate amplifier.

In the periodical Research Disclosure, June 1983, item 23027 an energy transducer device is described characterized by :
(1) two contacting photoconductive layers of different spectral sensitivity,
(2) each of said photoconductive layers stands in electrically conductive contact with a different electrically conductive support or layer,
(3) at least one of said electrically conductive layers is transparent to radiation whereto its contacting photoconductive layer is sensitive,
(4) the other photoconductive layer can be irradiated through its contacting photoconductive layer or through its contacting support or layer to increase its conductivity,
(5) a direct current (D.C.) source for applying a voltage difference between said conducting layers or supports, and
(6) an electric-signal-detecting means, e.g. resistor, between one of the poles of said current source and one of said conductive layers or supports.

The method of operating said transducer device comprises the following steps :
(A) the flood-light exposure, i.e. overall exposure, of one of said photoconductive layers to light whereby it becomes uniformly electrically conductive while a D.C. voltage difference is applied between the electrically conductive supports or layers,
(B) information-wise exposing the other photoconductive layer to electromagnetic radiation, e.g. X-rays, to which it is sensitive and to which the flood-light exposed photoconductive layer is substantially not sensitive while the support or layer in contact with the information-wise exposed photoconductive layer is connected to a means, e.g. ground, accepting charges leaking through the information-wise exposed photoconductive layer in correspondence with its exposed areas, and
(C) scanning-wise exposing the flood-light exposed photoconductive layer with light to which it is sensitive and to which the other photoconductive layer is substantially not sensitive while with a current source a D.C. voltage is applied between said conductive supports or layers having a current signal detecting means, e.g. resistor, connected between one of the poles of said voltage source and one of said conductive supports or layers.

Said device is particularly suited for recording an X-ray pattern and transforming it in corresponding signal currents that can be amplified, stored and used in display on CRT-tube or for modulating a writing light beam in the production of a hard copy, e.g. on photographic silver halide emulsion film.

### 3. Objects and Summary of the present Invention

It is an object of the present invention to provide a method for recording a pattern of penetrating electromagnetic radiation, e.g. an X-ray pattern, in the form of a charge pattern that is transformed in sequential analog or digital electrical signals, wherein the radiation pattern and the reading of the charge pattern do not proceed simultaneously hereby keeping the exposure to penetrating radiation such as X-ray image exposure of short duration which is important to avoid image blur, e.g. in medical radiography, and effecting the read out lateron in a location different from the exposure location and not limited by the duration of the imaging exposure.

It is a particular object of the present invention to provide a method for recording an X-ray pattern in the form of a charge pattern with a recording element contained in a cassette operatable in X-ray tables for medical radiography.

It is a further object of the present invention to provide a device in the form of a cassette adapted for carrying out the method of the present invention and that can be loaded and unloaded from common X-ray tables.

Other objects and advantages of the present invention will appear from the further description and drawings.

According to the present invention a method is provided for recording an image of penetrating radiation and transforming said image in sequential electrical signals, wherein said method comprises the steps of :
(1) providing an opto-electronic device comprising :
   (ia) two photoconductive layers that are in direct contact with each other, said photoconductive layers having different spectral sensitivity, or comprising :
   (ib) two photoconductive layers that may have same spectral sensitivity and both are in contact with an intermediary uniform pattern of separate electrically conductive micro-spots blocking light for which at least one of said photoconductive layers is sensitive, said micro-spots providing electrical conduction in a direction normal to the photoconductive layers but not allowing conduction along the surface of said photoconductive layers,
   (ii) two electrodes each of them being in electrically conductive contact with one of said photoconductive layers, said electrodes being transparent to radiation whereto its contacting photoconductive layer is sensitive,
   (iv) a direct current (D.C.) source for applying a voltage difference between said electrodes, and
   (v) an electric-signal-detecting means connected to one of said electrodes,
(2) flood-light exposing i.e. overall exposing one of said photoconductive layers to light whereby it becomes overall electrically conductive while a D.C. voltage difference is applied between said electrodes, said flood-light exposure proceeding during the information-wise exposure of the other photoconductive layer to penetrating electromagnetic radiation, but lasting no longer than the exposure to said penetrating radiation to which said other photoconductive layer is sensitive, while maintaining said D.C. voltage difference between said electrodes,
(3) scanning-wise exposing the flood-light exposed photoconductive layer with light to which it is sensitive while said D.C. voltage is maintained between said electrodes, hereby producing a sequential signal of image-wise varying electrical current that can be transformed in an external load in corresponding voltage variations.

Step (3) can be modified in that the voltage source is omitted and said external load is connected directly between said electrodes. Hereby on scanning-wise exposing the flood-light exposed photoconductive layer charges still present between said both photoconductive layers are released sequentially through said load. Reversed image values are obtained with respect to the procedure of the unmodified step (3) as described above.

By "penetrating electromagnetic radiation" is understood here X-rays and gamma-rays.

### 4. Brief Description of the Drawing

Fig. 1 represents the stage of the flood-light exposure of one of both photoconductive layers of a recording device used according to the present invention and the simultaneous image-wise X-ray exposure of the other photoconductive recording layer.

Fig. 2 represents the scanning-wise exposure of said flood-light exposed photoconductive layer reproducing the recorded X-ray image in the form of sequential electrical current variations yielding through a resistor (used as external load) corresponding voltage variations that can be amplified by known electronical techniques.

Fig. 3 represents in perspective view a cassette including a panel-like recording device according to the present invention. The cassette is in "closed" condition.

Fig. 4 represents the same cassette but in "opened" condition for read-out of the obtained charge image.

### 5. Detailed Description of the Invention

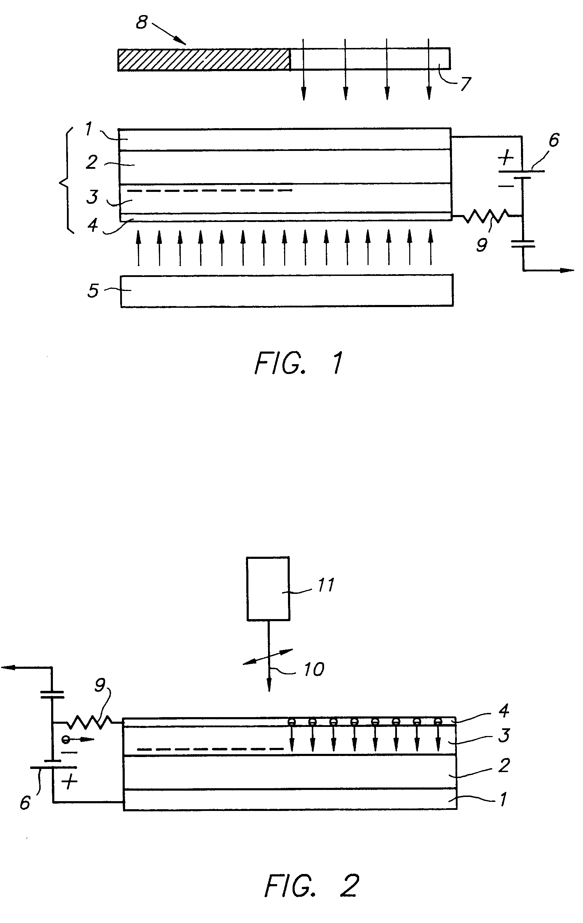

Fig. 1 illustrates a schematic cross-sectional view of a panel-type recording device used according to the present invention. Said device comprises according to one embodiment between electrodes 1 and 4 photoconductive layers 2 and 3 of which photoconductive layer 2 absorbs X-rays and becomes conductive when struck thereby. Photoconductive layer 3 is poorly sensitive to X-rays but sensitive to visible light in a part of the visible spectrum whereto photoconductive layer 2 is not or only poorly sensitive. The electrode 1 is highly transparent to X-rays 7 passing through an object 8 and may be in the form of a metal support, e.g. aluminium support having poor X-ray stopping power. The electrode 4 is transparent to visible light, e.g. is a NESA-coating (vacuum deposited indium-tinoxide coating) on glass support (support not shown in the drawing) so that photoconductive layer 3 can be exposed uniformly therethrough with visible light of a flood-light lamp 5.

The flood-light exposure, e.g. of a high intensity flash lamp, has not to last as long as the image-wise X-ray exposure, but has an intensity sufficient to built a charge image in the interface of the photoconductive layers 2 and 3 which image has opposite image values with respect to the X-ray image.

During the image-wise X-ray exposure and flood-light exposure a direct current (D.C.) voltage source 6 maintains a voltage that makes that in the X-ray exposed area a current flows between the electrodes 1 and 4. In the area that are not exposed to X-rays or to a smaller extent the current is nil or proportionally less and a relatively strong charge image is built in the interface between the photoconductive layers 2 and 3. A shorter duration of the flood-light exposure than the image-wise X-ray exposure makes that also a charge image (but of opposite polarity to that of the non-exposed area) is built in said interface in correspondence with the area exposed to X-rays.

Fig. 2 represents a read-out stage wherein a scanning light beam 10 of a laser source 11 exposes the previously flood-light exposed photoconductive layer 3 and generates an image-wise modulated electrical current flowing through the signal resistor 9 without disconnecting the voltage source 6.

During the scanning-wise exposure in the X-ray exposed area negative charges originating from the negative pole of the voltage source neutralize positive charges and equalize the charge level of negative charges over the whole interface between the photoconductive layers, hereby through the signal resistor operating in series with the d.c. voltage source an image-wise modulated analog voltage signal is generated.

According to an embodiment (not shown in Fig. 1 and 2) the panel-type recording device contains between the photoconductive layers 2 and 3 a uniform distribution of electrically conductive (metal) spots that are opaque to the applied flood light. These spots can be obtained by vacuum-evaporation of metal e.g. bismuth through a grid or by etching a uniformly applied metal layer, e.g. obtained by vacuum-depostion or electroless plating, using a known etching technique in combination with a removable photo-resist coating on top of said metal layer (ref. for electroless metal deposition US-P 4,666,735).

By the presence of said "opaque" layer built up by closely located micro-dots the flood light does not expose the photoconductive layer 2 in the area covered by said dots and the composition and spectral sensitivity of the photoconductor of photoconductive layer 2 may be same as of the photoconductor of photoconductive layer 3. However, these photoconductive layers may have a different thickness. The photoconductive layer 2 responsive to X-rays is normally thicker than the photoconductive layer 3 that is responsive to visible or infrared light.

For use in medical radiography the above described panel-like X-ray recording device is applied preferably in a cassette.

The cassette is operated with an external flood light source arranged underneath the photoconductive recording device in a "universal stand" X-ray table replacing or combined with a Bucky grid (see for a universal tiltable X-ray table the book "Medical X-Ray Technique - Principles and Applications by G. J. Van der Plaats (1959) Philips' Technical Library - The Netherlands, p.274-275).

According to a special embodiment the cassette internally contains the flood light source, e.g. in the form of an electroluminescent panel, uniformly emitting light all over its surface directed towards the photoconductive layer that has to be exposed to flood light.

A cassette which can be applied for including a removably positioned panel-like recording device for use according to the present invention is described in US-P 5,065,866. In the cassette according to said US-P the panel-like recording device applied in the present invention replaces a photo-stimulable phosphor plate.

According to a particular embodiment an X-ray cassette of the present invention comprises :
(i) a generally flat rectangular housing having two major walls which are plane and parallel to each other, at least one of said walls being transparent to X-rays, and the opposite wall transparent to visible light and/or infrared light,
(ii) two side walls permanently sustaining said major walls and leaving room for a flat insertable panel, and
(iii) two end walls one of which is permanently connected to said major walls and said side walls forming with said walls a pocket for inserting therein said panel, the other end wall being separatable from said pocket and being attached to said panel, wherein said panel comprises :
   (ia) two photoconductive layers that are in direct contact with each other, said photoconductive layers having different spectral sensitivity,
   (ib) two photoconductive layers that may have same spectral sensitivity and both are in contact with an intermediary uniform pattern of separate electrically conductive micro-spots blocking light for which at least one of said photoconductive layers is sensitive, said micro-spots providing electrical conduction in a direction normal to the photoconductive layers but not allowing conduction along the surface of said photoconductive layers,
   (ii) two electrodes each of them being in electrically conductive contact with one of said photoconductive layers, said electrodes being transparent to radiation whereto its contacting photoconductive layer is sensitive, and being connected each to a different pole of a D.C. voltage source, optionally through a plug socket making part of said separatable end wall.

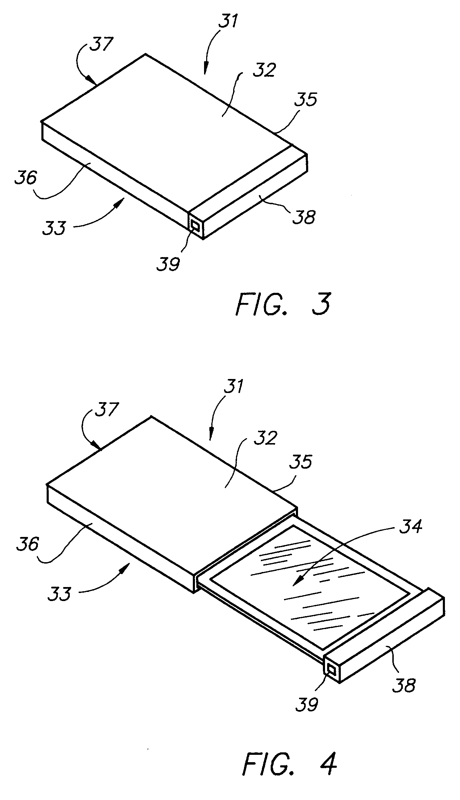

Fig. 3 illustrates such a cassette in "closed" condition. The cassette includes a housing (shell) 31 which is hollow and which is of rectangular configuration. Shell 31 has a pair of facing walls 32 and 33 between which a panel-type recording device 34 according to the present invention (not seen in Fig. 3) is sandwiched. The upper wall 32 is transparent to X-rays and the bottom wall 33 is transparent to visible and/or infrared light and faces photoconductive layer 3 of Fig. 1. The shell 31 has a pair of side walls (35, 36) and end walls (37, 38) at least one of which can be gripped and mechanically separated from the shell 31 taking with it the panel-type device 34 as shown in Fig. 4. The electrodes of the panel-type recording device according to the present invention can be connected to the poles of a D.C. voltage source through a plug socket 39 located in separatable end wall 38.

Fig. 4 represents the opened form of the cassette in which the charge image is read-out by scanning laser beam impinging through the transparent (supported) electrode on the photoconductive layer that has been exposed with flood-light.

An X-ray cassette having resemblance to the one of the present invention is disclosed in European patent specification 0 394 564 and corresponding US-P 4,827,136.

In the method of the present invention the flood light exposed photoconductive layer mainly (for at least 50 % by weight) contains an organic photoconductor, and the photoconductive layer that becomes conductive by irradiation with penetrating radiation mainly (for at least 50 % by weight) contains a photoconductor including at least one element with an atomic number of 30.

In the recording device represented by Fig. 1 of the present specification the said photoconductive layer 3 contains or consists of a poorly X-ray sensitive photoconductor such as an organic photoconductor having a very low X-ray absorption because of the absence of high atomic number elements. A survey of organic photoconductors, monomeric as well as polymeric, is given e.g. in Chemiker Zeitung, July/August 1982, p. 275-287.

The spectral sensitivity of photoconductors has been discussed by S.K. Ghosh and W.E. Bixby in J. Applied Photogr. Eng., Vol. 6, No. 5, October 1980, p. 109-114 under the heading : "Spectral Sensitivity of Photoconductors as Used in Electrophotography". From Figure 6 in said article appears that non-doped selenium has a sensitivity that runs out at about 600 nm, and from Figure 7 can be learned that the spectral sensitivity of ZnO dispersed in polystyrene-polyethyl acrylate-polyvinyl acetate sensitized with a cyanine dye is very strong between 700 and 800 nm. From Figure 9 can be learned that the relative sensitivity of 1:1 TNF:PVK compared to that of amorphous selenium by negative charging is about 150 to 6 at 632.8 nm (the wavelength of the helium-neon laser). 1:1 TNF:PVK stands for a molar mixture of tetranitrofluorenone with poly-N-vinylcarbazole.

Relative spectral sensitivity, also called spectral responsivity, of alpha-silicium, As₂Se₃, CdS, Se-Te and of a particular OPC (organic photoconductor) of KODAK is represented in Fig. 1-14 on page 20 of the book "Imaging Processes and Materials" Neblette's Eight Edition, Edited by John Sturge et al. - Van Nostrand Reinhold - New York (1989).

Useful photoconductors for X-ray recording are e.g. selenium, lead(II) oxide, and lead(II) iodide. The latter is faintly yellow and not sensitive to red light. It is preferably used in a hydrophobic insulating organic polymeric binder to exclude moisture that increases its conductivity. Other photoconductors for that purpose are described by R.M.Schaffert in the book "Electrophotography" 2nd rev. ed., The Focal Press - London and New York (1975), p. 191-198 and 313-326.

Photoconductors particularly useful for recording of X-rays with an X-ray spectrum of 20-35 keV, as applied normally in mammography, contain or consist of elements having an atomic number in the range of 30 to 40, e.g. selenium.

Photoconductors particularly useful for recording of X-rays with an X-ray spectrum of 40-100 keV, as applied normally in diagnosis of bone structure (e.g. chest radiography), contain or consist of elements having an atomic number above 45, e.g. cadmium, tellurium, lead and thallium. Thallous sulfide (Tl₂S) has been mentioned in the above mentioned book of R.M. Schaffert, p. 374 as a photoconductor having a spectral response in the wavelength range of about 0.6 to 1.4 µm whereby it is suited for scanning-wise exposure with infra-red laser beams of commercially available semiconductor lasers. It has been found by us that thallous sulphide (the atomic number of thallium is 81 and of lead is 82) is also a very useful X-ray photoconductor that may be applied in industrial (at more than 100 keV) as well as in medical radiography, e.g. chest radiography.

The electrical voltage signal obtained in the read-out of the charge image can be electronically amplified by means known in the art. The signal obtained in the scanning-wise exposure is in analog form. For transformation in digitized form an analog signal is divided into a number of adjoining intervals called quantization levels. The total number of quantization levels defines the gray scale i.e. the number of shades that can be represented. A gray scale of 64 levels can yield a fairly realistic reproduction. The quantization levels are represented by a set of binary numbers whereby the analog signal becomes digitalized and as such can be stored in the memory unit of a computer. The data can then be processed to obtain a new set of digital values, which in turn can generate a revised image.

Accurate and reliable devices for sampling and quantizing an image or for displaying an image reconstructed from digital data have been commercially available for more than one decade.

Once an image has been digitized and transmitted to a computer various mathematical operations can be carried out on the data in order to improve the visual quality of the image. For example, the contrast of the whole or a part of the image can be enhanced.

By subtracting the minimum brightness value from each pixel (elementary image point) and then multiplying the brightness value of each pixel by a constant, the digital data are spread over a wider range and the resulting image has a greater image contrast (average gradient is enlarged).

A further possibility of mathematical manipulation of an image in digitized form resides in the possibility to register image points that are geometrically shifted as a consequence of the different angle of exposure with respect to the exposure source. Numerical analysis of the different exposure situation for each detector area makes it possible to introduce a computer algorithm that brings the different detector area into the same angle of exposure situation. By the same technique blur caused by movement of the original can be cancelled when the equations of motion (extent and direction) are known or can be measured.

## Claims

1. A method for recording an image of penetrating radiation and transforming said image in sequential electrical signals, wherein said method comprises the steps of :
(1) providing an opto-electronic device comprising :
(ia) two photoconductive layers that are in direct contact with each other, said photoconductive layers having different spectral sensitivity, or comprising :
(ib) two photoconductive layers that may have same spectral sensitivity and both are in contact with an intermediary uniform pattern of separate electrically conductive micro-spots blocking light for which at least one of said photoconductive layers is sensitive, said micro-spots providing electrical conduction in a direction normal to the photoconductive layers but not allowing conduction along the surface of said photoconductive layers,
(ii) two electrodes each of them being in electrically conductive contact with one of said photoconductive layers, said electrodes being transparent to radiation whereto its contacting photoconductive layer is sensitive,
(iv) a direct current (D.C.) source for applying a voltage difference between said electrodes, and
(v) an electric-signal-detecting means connected to one of said electrodes,
(2) flood-light exposing i.e. overall exposing one of said photoconductive layers to light whereby it becomes overall electrically conductive while a D.C. voltage difference is applied between said electrodes, said flood-light exposure proceeding during the information-wise exposure of the other photoconductive layer to penetrating electromagnetic radiation, but lasting no longer than the exposure to said penetrating radiation to which said other photoconductive layer is sensitive, while maintaining said D.C. voltage difference between said electrodes,
(3) scanning-wise exposing the flood-light exposed photoconductive layer with light to which it is sensitive while said D.C. voltage is maintained between said electrodes, hereby producing a sequential signal of image-wise varying electrical current that can be transformed in an external load in corresponding voltage variations.

2. Method according to claim 1, with the modification that in said step (3) the voltage source is omitted and said external load is connected directly between said electrodes.

3. Method according to claim 1 or 2, wherein said penetrating electromagnetic radiation is X-ray radiation.

4. Method according to any of the preceding claims, wherein the food-light exposure terminates before the ending of the image-wise exposure to penetrating radiation.

5. Method according to claim 4, wherein the flood light exposure proceeds with a flash lamp.

6. Method according to any of the preceding claims, wherein the flood light exposed photoconductive layer mainly contains an organic photoconductor.

7. Method according to any of the preceding claims, wherein the photoconductive layer that becomes conductive by irradiation with penetrating radiation mainly contains a photoconductor including at least one element with an atomic number of 30.

8. Method according to claim 7, wherein said photoconductor is thallous sulfide.

9. Method according to claim 1, wherein said micro-spots are made of bismuth.

10. An X-ray cassette comprising :
(i) a generally flat rectangular housing having two major walls which are plane and parallel to each other, at least one of said walls being transparent to X-rays, and the opposite wall transparent to visible light and/or infrared light,
(ii) two side walls permanently sustaining said major walls and leaving room for a flat insertable panel, and
(iii) two end walls one of which is permanently connected to said major walls and said side walls forming with said walls a pocket for inserting therein said panel, the other end wall being separatable from said pocket and being attached to said panel, wherein said panel comprises :
(ia) two photoconductive layers that are in direct contact with each other, said photoconductive layers having different spectral sensitivity,
(ib) two photoconductive layers that may have same spectral sensitivity and both are in contact with an intermediary uniform pattern of separate electrically conductive micro-spots blocking light for which at least one of said photoconductive layers is sensitive, said micro-spots providing electrical conduction in a direction normal to the photoconductive layers but not allowing conduction along the surface of said photoconductive layers,
(ii) two electrodes each of them being in electrically conductive contact with one of said photoconductive layers, said electrodes being transparent to radiation whereto its contacting photoconductive layer is sensitive, and being connected each to a different pole of a D.C. voltage source, optionally through a plug socket making part of said separatable end wall.
